# EUROPEAN PATENT SPECIFICATION

(11) **EP 2 035 611 B1**
(45) Date of publication and mention of the grant of the patent: **16.05.2018**
(21) Application number: 07788706.5
(22) Date of filing: 13.06.2007
(51) Int. Cl.: D04H 13/00, C03C 25/00, C03C 25/42, B32B 17/02, E04B 1/94

(54) **FIREPROOF MINERAL WOOL PRODUCT AND PROCESS FOR ITS PREPARING**
FEUERFESTES MINERALWOLLEPRODUKT SOWIE VERFAHREN ZU SEINER HERSTELLUNG
PRODUIT IGNIFUGE EN LAINE MINÉRALE ET PROCÉDÉ POUR SA PRÉPARATION

(30) Priority: 15.06.2006 FI 20065409
(43) Date of publication of application: 18.03.2009
(73) Proprietor: Paroc Group Oy, 00180 Helsinki (FI)
(72) Inventor: FELLMAN, Jacob, 21600 Pargas (FI); RANTANEN, Beatrice, 21600 Pargas (FI)
(74) Representative: LEITZINGER OY
(86) International application number: PCT/FI2007/000164
(87) International publication number: WO 2007/144451

(56) References cited:
- EP-A- 0 374 112
- EP-A2- 0 485 867
- EP-B1- 1 086 055
- WO-A-91/06407
- GB-A- 772 628
- SE-B- 452 040
- SE-B- 452 041
- US-A- 2 746 895
- US-A1- 2002 187 296

## Description

Fireproof mineral wool product and also process and arrangement for its preparing One of the objects of the present invention is a process for manufacturing fireproof mineral wool products, e.g. mineral wool slabs, in which process mineral raw material is melted and fibrated into mineral wool fibres which thereafter concurrently are collected into two or more separate primary mineral wool webs, each of these on separate own collecting drums, whereafter these separate primary mineral fibre webs at a later stage are joined into an intermediate mineral fibre web, which by means of a folding process is formed into a final mineral fibre web having a desired thickness, which in a manner known per se is finished in order to obtain a fireproof mineral wool product.

Another object of this invention is a fireproof mineral wool product, e.g. a fireproof mineral wool slab, which mineral wool product at least comprises an intermediate mineral wool web (38) formed from at least two joined primary mineral wool webs (4a, 4b), which intermediate mineral wool web is folded on top of itself so that each folded mineral wool layer (39) at least partially covers the previous folded layer so that the mineral wool product in the direction of its thickness comprises at least two compressed folded layers of said intermediate web on top of each other, and a fire retardant, which mineral wool product in a manner known per se is finished in order to obtain a fireproof mineral wool product.

An object of this invention is also an arrangement for carrying out the process according to this invention comprising one or more fibration aggregates arranged so that it/they from a supplied mineral melt form(s) a stream of mineral fibres.

Mineral wool has been manufactured for a good 100 years. For example, the publication SE-452040 describes such a manufacturing process. general properties and above all its isolating capacity has made it into a standard material with almost innumerable fields of application. From an economical and the users view the isolating capacity is undoubtedly the most essential property but also its fire retarding ability is of great importance. Despite the good properties there is however a need for improving certain aspects concerning amongst other the fire safety and the quality of the final products themselves but also certain aspects concerning the manufacturing process.

As far as concerns the quality of the product itself, it may be pointed out that the quality and the usability thereof would be better if one could reduce the amount of mineral pearls in the mineral wool. Mineral pearls have no function in the wool but they are just a ballast which brings unnecessary weight to the product. If the pearls can be separated they may be collected and reused, which reduces the material consumption. The quality of the product is also improved if the surface layers are comprised of primary web layers, the outer surface thereof not being impaired due to added substances dusting or coming loose, which added substances are intended for enhancing the fire retarding properties of the product.

The addition of fire retardant in powder form to the product also constitute a problem with prior art technique, because the fire retardant then causes unnecessary dusting, which leads to soiling of the production line and wearing of the conveyor belts. If the fire retardant is used in the form of a suspension this will on the other hand not lead to dusting but nonetheless to splashing, as well as soiling of the production line and also wearing of the conveyor belts as above. Another drawback with water based slurry is that the water deteriorates or totally prevents the curing process, which leads to deterioration of the product's quality. With today's pendulum technique it is also difficult to have additives evenly distributed in the products without material getting on the surface layers of the slabs. If a single primary web is folded, the edges thereof must be left without added material or otherwise this material will appear on surface layers of the finished product.

With the present invention added fire retardant may be evenly distributed over the whole primary surface, without appearing or showing on the surface of the final product. Yet another advantage of the present invention is that one may choose where to add the fire retardant in transverse direction of the primary web. If one wants to have a distribution in the finished product near the surface layers the fire retardant is added in strings along the primary web's/webs' edges, if one desires to have the fire retardant in the middle of the final product then the material is introduced in a string in the middle.

A drawback with today's technique is also that the amount of fire retardant which is to be added if the desired enhancement of the fire properties is to be achieved, will become very concentrated if only a part of the width of the primary web may be used for the purpose. Normally only about 60 % of the width may be used. Also because finally divided material on the primary web prevents gluing together of the primary layer during the pendulum movement the fire retardant has to be very coarse-grained so that a sufficient amount can be added. Another drawback with today's technique is that the added material lies on the surface of the primary layer when it is subjected to a pendulum movement. The fibre web moves sideways during the pendulum movement with great speed, and all loose material that has been added is thrown outwards and falls on the side of the line with dusting and soiling as a result. Fine material dusts and flies around whereas coarse material is thrown far out of the line. The present invention can use the whole width which means that the usable surface is more than 50 % higher, which leads to that the material does not need to be so coarse. Furthermore said two or more webs are pressed together before the pendulum movement into one layer with the additive in the middle which results in that the wool layers are glued together in a better way and that the material does not get thrown out during the pendulum movement. In this way the present invention has eliminated the two biggest drawbacks in the prior art process.

The fire retardant can also be added already at the drum or in its vicinity onto the primary webs and these can immediately thereafter be joined which results in that the fire retardant faster will come into contact with the binder applied to the fibres. The assembled fibre web is affected during the continued conveying and pendulum movement by the movement which causes added material to penetrate in between the fibres. This causes the adhesion to the wool becoming much better than if the fire retardant would be lying on the surface for a long the time. Therefore, due to the present invention, the amount of added material can be higher and/or the particle size thereof may be smaller without the splitting strength of the product deteriorating. The distribution of the fire retardant becomes more homogeneous and also the material will situate closer to the surface of the final slabs.

The following calculation example shows how the material is distributed. If one according today's technique manufactures a slab with 10 layers or plies, one may add material only between them, i.e. 9 separate material layers, even if the material is added onto both surfaces of the primary layer. The distance from the surface to the first material layer will thus become 1/10 of the thickness of the final slab. With the aid of the technique in the present invention one gets 10 double layers with one layer of added material in each layer, i.e. 10 separate material layers and the distance from the surface to the first material layer becomes 1/20 of the thickness of the final slab. With the present invention one can if so desired furthermore add material after the pendulum (folding device) on top of the layer which is not already covered by the following folding and in this manner obtain 19 layers of added material. Hereby one has however to take into account that the material for these 9 extra material layers can not be distributed over the whole surface, but a part will be visible on the surface of the finished slab. It is possible to calculate how big a part which is to be left without material if one knows the width of the primary web, the width of the secondary web and the number of layers.

The present invention may preferably be utilized for adding recycled wool with an enhanced distribution and without the drawback normally existing if the added recycled wool is to be added in greater amounts. According to today's technique a part of the recycled wool will remain on the surface layer of the finished slabs if the recycled wool is added in an amount greater than about 10 %. Tests with different amounts of recycled wool have shown that the product's mechanical properties are deteriorated if recycled wool is fed onto the primary web in great amounts. 10 - 12 % of recycled wool of the same quality as the product may be added without deterioration of the compression or splitting strength. An uneven distribution of the recycled wool between the layers immediately has a negative effect on the quality of the product. If recycled wool of mixed quality is added it is even more important that it is evenly distributed in the layers. With the present invention the recycled wool may be distributed more evenly between the layers and thereby be utilized more effectively. It is furthermore also preferable with the present technique to mix fire retardant and recycled wool and to apply it between the primary webs without the drawback of bad adhesion between the layers and undesirable material appearing on the surface layers.

Double collection by two collecting drums of fibrated mineral material is previously known per se, e.g. from the publication SE-452041 (Rockwool AB). In this publication is not however mentioned anything about using a fire retardant and its use in mineral wool products. In SE-452041 is also described the long-known problem of pearls in mineral fibre material and that one may remove these pearls from already formed primary mineral fibre webs by subjecting these to a downwardly directed force, e.g. a combination of gravitation and acoustic energy of such a force and magnitude that particles on and inside the webs can be forced to wander in the direction of the force, so that particles not desired wander out of the mineral fibre web whereas desired particles are forced to wander into the mineral fibre web.

In practical this is difficult to do since a primary web according to today's manufacturing capacity has to be so thick and move so fast that the particles will not have time to remove themselves out of the web. With the present invention this is facilitated since the primary webs are only half as thick.

EP-1086055 B1 discloses a method for adding fire retardant to a primary mineral fibre web but where the collection of the mineral fibres which are to form the mineral fibre web is performed with only one collecting drum. This method therefore suffers from the problem of dusting and soiling of the production line. During the pendulum movement the primary web moves heavily sidewards in the air which causes material to be thrown out. If one in the method described in EP-1086055 B1 also adds the fire retardant to both sides of the mineral fibre web this drawback will increase even more. Another drawback with this technique is that only a part of the primary web surface may be used if one wants to avoid fire retardant on surface of the final product (which is explained by Fig. 1 p. 23 in EP 1086054 B1 and by that which has been said above in this matter with reference to EP-1086055 B1).

The above mentioned problems may be overcome by the process according to the present invention which is characterized in that there before the separate primary mineral fibre webs are joined in order to form an intermediate mineral fibre web is added fire retardant to the surface of and/or into at least one of the primary mineral fibre webs in the space between the intermediate mineral fibre webs over at least a longitudinal region having a width, which at least partially extends over the width of the primary mineral fibre web in question from at least one of the lateral edges of the primary mineral fibre web in question.

Advantageous embodiments of the process according to the invention are presented in the dependent process claims hereafter. Some of these embodiments are also presented below.

In one of the preferred embodiments mineral pearls which accompany the fibres from the fibration stage are subjected to a constant force, e.g. gravitation in combination with acoustic energy directed at an angle against the progression direction of the fibres with such a frequency and force that at least a part of the mineral pearls are prevented from reaching the collecting drums of the primary mineral fibre webs and/or that they are pushed out of the already formed primary mineral fibre webs, the amount of mineral pearls thereby being reduced in the final product. Preferably the acoustic energy is applied between the fibration stage and the collection of the fibres into primary mineral fibre webs and/or between the collection of the fibres into primary mineral fibre webs and the joining into an intermediate mineral fibre web.

The fire retardant is preferably added by blowing, spurting, spraying, sprinkling and/or by aid of acoustic energy to the respective opposite inner surfaces of the primary mineral fibre webs. The fire retardant may then be in a dry powder form or in a liquid suspended form. The fire retardant is preferably added between each separate collection drum and the joining of the primary mineral fibre webs into an intermediate mineral fibre web. The fire retardant can be added as a dry powder and/or as a liquid suspension. The fire retardant may also be added such that it is sprayed separately with two separate nozzles against the opposite sides of two adjacent primary mineral fibre webs.

The fire retardant may be gypsum, aluminium hydroxide or magnesium hydroxide, or a mixture of these in a fine and/or coarse form. The joining to an intermediate mineral fibre web may for example be performed before or in conjunction with the folding.

In an especially preferable embodiment the fire retardant is distributed in two separate longitudinal regions, whereof which one of the regions in the lateral direction of the primary mineral fibre web concerned extends itself from one of the lateral edges and the other region in the lateral direction of the primary mineral fibre web in question extends itself from the other lateral edge of the primary mineral fibre web in question in towards the middle of the primary mineral fibre web in question over a distance which is less than half of the width of the primary mineral fibre web in question, preferably ¼ to 1/3 part of the whole width of said primary mineral fibre web.

The fireproof mineral wool product according to the present invention is characterized in that the intermediate mineral wool web between at least two and/or in at least one of its primary mineral fibre webs contains a fire retardant distributed over at least one longitudinal region, which to its width at least partially extends over the width of the primary mineral fibre web in question from at least one of the lateral edges of the primary mineral fibre web in question.

In a preferred embodiment the fire retardant is concentrated in one or several regions between the middle and the outer surface of the fireproof mineral wool product, preferably in regions situated at distance of 5 - 20 % of the thickness of the fireproof mineral wool product from the outer surface of said mineral wool product in the direction of its thickness.

The fire retardant is preferably distributed in two separate longitudinal regions, of which one region in the direction of the width of the primary mineral fibre web in question extends from one of the lateral edges and the other region in the direction of the width of the primary mineral fibre web in question extends from the other lateral edge of the primary mineral fibre web in question in towards the middle of the primary mineral fibre web in question over a distance which is less than half of the width of the primary fibre web in question, preferably ¼ to 1/3 part of the whole width of said primary mineral fibre web.

In the fireproof mineral wool product the fire retardant is preferably fine-grained but it may also be coarse-grained.

In a preferred embodiment the amount of mineral pearls in the mineral wool product is less than 30 % by weight, preferably less than 20 % by weight and that said compressed mineral wool layers contain intermediate layers comprising at least 20 % by weight of fire retardant which at least partially has penetrated into the primary mineral wool layers which are close to the surfaces of the mineral wool product.

For embodiments of the process and the product according to the invention further applies: regions with fire retardant are preferably essentially planar and lie in the same plane as the large surfaces of the primary mineral wool webs and the intermediate mineral wool web. The primary webs may also amount to more than two but then there is also needed a separate collector of the fibres for each separate primary mineral wool web. The primary webs may also be of different thickness if so desired.

Tests with prior art fibration technique show that the contents of pearls in the fibres which are collected by the upper drum is much lower than the contents of pearls in the lower fibres. Therefore it suffices to use acoustic vibration on the lower web 16 to remove pearls in order to reduce the pearl contents with 50 % (from 40 % to 20 % in the finished product).

The arrangement according to present invention again is characterized in that it comprises two or more collecting drums for collection of the stream of mineral fibres into two or more primary mineral fibre webs, and in that at least one supply element for supplying fire retardant is arranged at least between two of the primary mineral fibre webs being brought against each other. The supply elements of the arrangement are preferably situated between the collection drums and the place where the joining into an intermediate mineral fibre web occurs. In another preferable embodiment the arrangement is characterized in that it further comprises between the fibration aggregate(s) and the collection drums and/or the collection drums and the joining into an intermediate mineral fibre mat comprises at least one acoustic separation element for the separation of the mineral pearls from the fibrated material stream which is to form the mineral fibre web, which acoustic separation element directs acoustic energy at an angle against the propagation direction of the fibres at such a frequency and force that the amount of mineral pearls in the final product is reduced.

The advantages of the invention are therefore that:
- one can freely decide where the added material is to be situated in respect of the height of the final product, by adding it evenly over the primary web/webs or in the middle or at the edge/edges
- that the surface layer of the final product will not be deteriorated by added material which easily might detach
- that the added material quickly is bound to the mat before the binder dries
- that the layers in the final product in a better manner are kept together, which results in that reduced particle sizes of the added material may be used
- a major part of the pearls may be removed, which makes it possible to introduce fire retardant instead of pearls, whereby the density may be kept essentially unchanged whereas the fire resistancy is increased
- the conveyor belts are worn less when the fire retardant is added between the primary webs and not directly against the conveyor belts
- the dusting is reduced.

In the following the invention is described in more detail by referring to the annexed figures, where
- Figure 1: schematically shows an arrangement for performing the process according to the invention,
- Figure 2: shows a pearl separator device as seen from the front in the direction of the line,
- Figure 3: shows another arrangement according to Figure 1 with an alternative position for spraying of fire retardant, and
- Figure 4: shows an intermediate product of a mineral wool product in slab format.

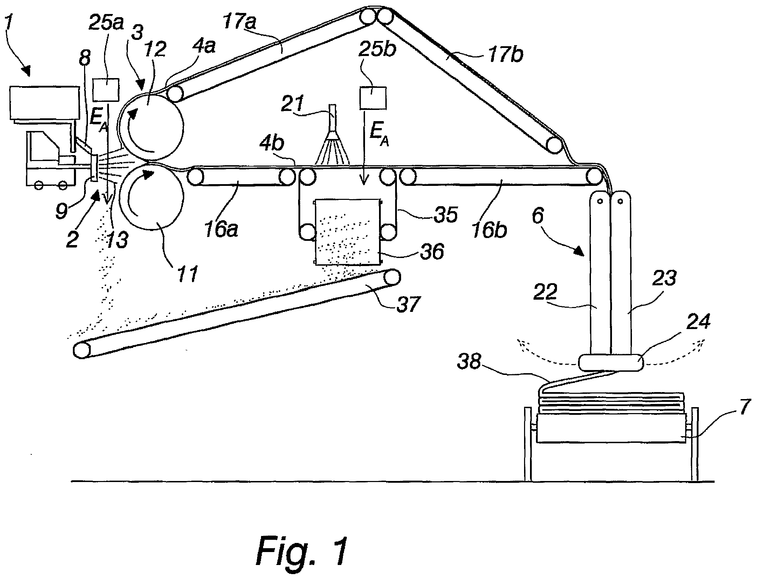

The device arrangement shown in Figure 1 generally comprises a melt oven 1, from which the melt first is conveyed to a fibrating aggregate 2, and from there the formed fibres are conveyed to a collecting device 3, which in this example comprises two collecting drums 11 and 12 (there can also be more drums).

Between the fibration aggregate 2 and the two collection drums 11 and 12 is arranged an acoustic element 25a which emits acoustic energy E_{A} in essentially perpendicular direction against the essentially horizontal propagation direction of the fibre stream. This directed acoustic energy E_{A} in combination with the gravitation distances the pearls in the fibre stream from the propagation direction of the fibre stream, so that a major part of the pearls do not reach the collection drums 11 and 12 but fall down.

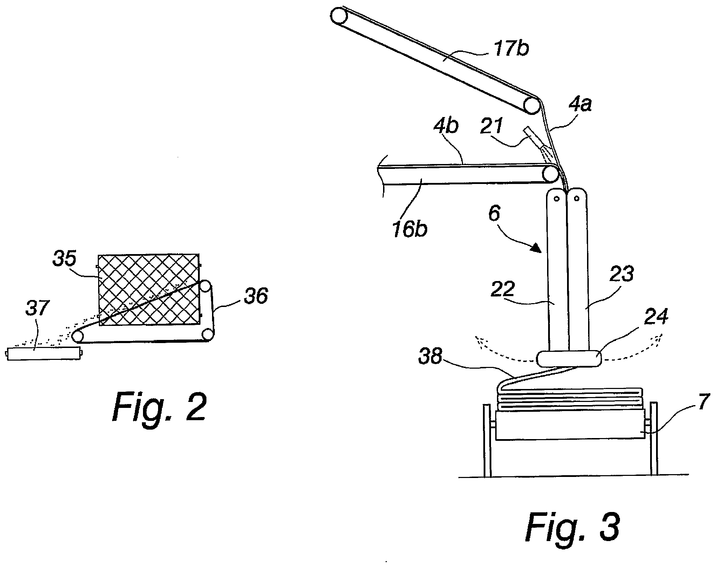

After that an appreciable amount of the pearls has been removed from the fibre stream according to the above and the fibre stream has formed the primary mineral fibre webs 4a and 4b these are by the conveyors 16a and 16b as well as 17a and 17b separately led further for treatment with fire retardant as well as for joining into an intermediate mineral fibre web, which thereafter is folded with a folding device 6. The intermediate mineral fibre web is folded onto a receiving belt 7 in movement. Thereafter this folded intermediate web is compressed into a unitary and cohesive mat according to prior art. Between the conveyors 16a and 16b is arranged a pearl separator device, which consists of three different conveyor belts 35, 36 and 37. This device is also illustrated in Figure 2 in the running direction of the line as seen from the front.

The conveyor belt 35 is arranged in the same line with the conveyors 16a and 16b and it collects pearls and additional material such as fire retardant, binder, etc., which has not attached to the fibre web 4a. The additional material, especially the fire retardant is added to the lower primary mineral fibre web 4b from above with a spraying device 21 which is arranged straight above the conveyor belt 35 of the pearl separator device.

The conveyor belt 35 comprises a suitable coarse mesh which lets pearls and additional material pass through it but not fibres. Pearls can not be separated from a fibre web if it is thick, but in the present case where the material is collected onto two drums the fibre webs (4a and 4b) become much thinner and when also the pearls mostly are collected onto the lower part of the lower web 4b a major part can be removed.

The second conveyor belt 36 of the pearl separator device is a triangular track which receives those particles (mostly pearls) which fall through the coarse mesh conveyor belt 35 and which sloping towards the third conveyor belt 37 conveys thereto the collected particles for final collection of these in one and the same place as the pearls which have been deviated away by gravity and the first acoustic element 25a.

Above the first conveyor belt 35 of the pearl separator device after the spraying device 21 in the running direction is arranged a second acoustic element 25b which radiates acoustic energy E_{A} at an angle against the lower primary fibre web 4b which is conveyed on the conveyor belt 35. At the same time as this acoustic energy E_{A} forces in the additional material, that is to say especially the fire retardant, into the primary fibre web 4b it also forces out unwantedly accompanying pearls out off the web 4b. The fire retardant may be coarse, coarser than the pearls, in order to reduce the dusting. Because the fire retardant will be situated between the two fibre webs it will therefore not wear the transport belts 22 and 23 of the folding device 6.

One advantage of an assembly according to Figure 1 with two collection drums 12 and 13 is that the upper drum 12 collects fibres, whereas pearls due to the gravitation force and also due to possibly supplied acoustic energy E_{A} are collected in the lower part of the mineral wool chamber. The upper primary fibre web 4a therefore has a very low content of pearls. The lower primary fibre web 4b which still contains pearls may as already has been described before be treated with a second acoustic element 25b when it passes over a pearl separator conveyor 35. In conjunction with this are then by a spraying device 21 sprayed onto the lower primary web 4b additives, especially fire retardant, which thereafter is going to reside between the two primary fibre webs when they are joined. The fire retardant is for example magnesium hydroxide in the form of a dry powder. In order to have the particles of the fire retardant attaching even more better to the surfaces extra binder may be sprayed during the addition.

In Figure 3 is pictured an alternative way of adding fire retardant by a spraying device 21, where the spraying device 21 is directed so that it sprouts fire retardant onto the inner surfaces of both primary webs in a position where the primary webs are approaching each other just before they are joined into an intermediate mineral fibre web.

In prior art it is known that fibres may be formed e.g. in the following way: From the melting oven 1 the melt flows continuously over the melt groove 8 down onto the spinning wheel 9. A stream of a gas for example a stream of air arriving from the left in the figure, emitted from a blowing device not shown in the figure, leads the formed fibres towards two perforated drums 11 and 12. The fibres 13 being in the stream of air then set themselves in the form of layers 4a and 4b on respective drum. Both layers are removed and conveyed further as separate primary mineral fibre webs 4 by said conveyors 16 and 17 in order to according to the invention to be treated with fire retardant before the primary mineral fibre webs 4 are joined into an intermediate mineral fibre web which is then to be folded.

Spraying device 21 is essentially comprised of a spraying nozzle which can be of many types.

The folding device 6 comprises two parallel conveyor belts 22 and 23 according to known technique. The pendulum movement of the folding device 6 is provided by a crank mechanism driven by a motor (not illustrated) connected to the lower part of the folding machine 6. After exiting the folding machine 6 the joined primary webs 4a and 4b are set in a folded manner on the conveyor belt 7.

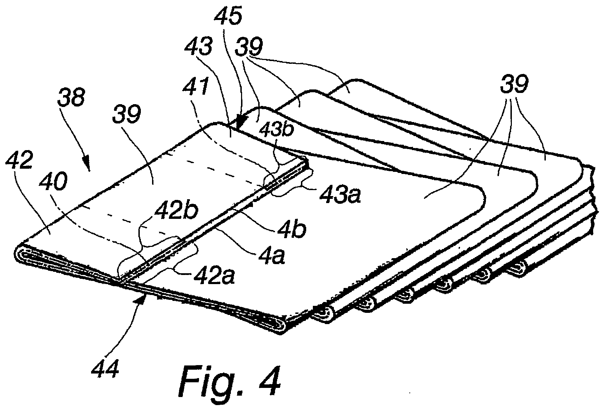

In Figure 4 is shown an intermediate product manufactured according to the process of the invention being ready to be compressed and finished into a final mineral wool product of slab format. This intermediate product comprises an intermediate mineral wool web 38 which is folded on top of itself so that each folded mineral wool layer 39 at least partially covers the previous folded layer 39 so that the final mineral wool product in the direction of its thickness comprises ten compressed folded layers 39 of said intermediate web 38 on top of each other.

The intermediate web 38 has, as evident from the description above (see for example Figure 1) has been formed by joining two primary mineral wool webs 4a and 4b of which the lower web 4b has been coated with fire retardant. In the present example in accordance with Figure 4 fire retardant has only been added to longitudinal lateral regions of the surface of said lower web 4b, which regions are closest to the lateral edges 44 and 45 of the web 4b.

The intermediate mineral wool web 38 or that is to say each separate mineral wool layer 39 thereby comprise two sections or regions 40 and 41 containing fire retardant in form of layers, which essentially lie in the same plane. As is evident from Figure 4 the middle portion in the intermediate web 38 between the two primary mineral wool webs 4a and 4b of the intermediate web is lacking fire retardant. The mineral wool layer is therefore not continuous in the middle and therefore divided into two separate layer portions or regions 40 and 41, which essentially lie in the same plane.

The layer portions or regions 40 and 41 of fire retardant are therefore situated between the opposite primary web portions 42a and 42b as well as the primary web portions 43a and 43b (the boundaries of the primary web portions towards the middle in the direction of the intermediate web's width is defined by the dashed lines) situated next to the lateral edges 44 and 45 of the intermediate web 38 (i.e. at the same time also of the primary webs 4a and 4b).

The fire retardant is in this example concentrated in layers between the middle and the outer surface of the final and finished mineral wool product in layers which are at a distance of about 5 - 20 % of the thickness of the mineral wool product from the outer surface of the final mineral wool product in its thickness direction. The fire retardant is in this example fine-grained with a grain size of 0.2 - 2 mm.

The amount of mineral pearls in the mineral wool product is less than 20 % by weight and said compressed mineral wool layers contain intermediate layers containing at least 20 % by weight of fire retardant which at least partially has penetrated into the primary mineral wool layers which lie close to the surfaces of the mineral wool product.

## Claims

1. A process for manufacturing fireproof mineral wool products, e.g. mineral wool slabs, in which process mineral raw material is melted and fibrated into mineral wool fibres (13) which thereafter simultaneously are collected into two or more separate primary mineral fibre webs (4a, 4b), each onto separate own collection drums (11, 12), whereafter these separate primary mineral fibre webs (4a, 4b) at a later stage are joined into an intermediate mineral fibre web (38), which through a folding process is formed into a final mineral fibre web having a desired thickness, which in a manner known per se is finished in order to obtain a fireproof mineral wool product, **characterized in that** there before the separate primary mineral fibre webs (4a, 4b) are joined in order to form an intermediate mineral fibre web (38) is added fire retardant to the surface of and/or into at least one of the primary mineral fibre webs (4a or 4b) in the space between the intermediate mineral fibre webs (4a, 4b) over at least one longitudinal region (40, 41) having a width at least partially extending over the width of the primary mineral fibre web (4a or 4b) in question from at least one of the lateral edges (44 or 45) of the primary mineral fibre web in question.

2. A process according to claim 1, **characterized in that** mineral pearls accompanying the fibres from the fibration stage are subjected to a constant force which is achieved by e.g. the gravitation in combination with supplied acoustic energy (E_{A}), directed at an angle against the propagation direction of the fibres at such a frequency and force that at least a part of the mineral pearls are prevented from reaching the collection drums (11, 12) of the primary mineral fibre webs (4a, 4b) and/or that they are extruded from the already formed primary mineral fibre webs (4a, 4b), whereby the amount of mineral pearls in the final product is reduced.

3. A process according to claim 2, **characterized in that** the acoustic energy (E_{A}) is applied between the fibration stage and the collection of the fibres (13) into primary mineral fibre webs (4a, 4b) and/or between the collection of the fibres (13) into primary mineral fibres webs (4a, 4b) and the joining of said primary mineral fibre webs into an intermediate mineral fibre web (38).

4. A process according to any of the claims 1-3, **characterized in that** the fire retardant by blowing, spraying, sprinkling and/or acoustic energy is supplied to respective opposite surfaces of the primary mineral fibre webs (4a, 4b) and/or into the mineral fibre webs.

5. A process according to any of the claims 1-4, **characterized in that** the fire retardant is added between each separate collection drum (11, 12) and the joining of the primary mineral fibre webs (4a, 4b) into an intermediate mineral fibre web (38).

6. A process according to any of the claims 1-5, **characterized in that** the fire retardant is added in the form of a dry powder and/or a liquid suspension.

7. A process according to any of the claims 1-6, **characterized in that** the fire retardant is applied onto the formed primary mineral fibre webs (4a, 4b) crosswise of the web so that it with respect of the height is distributed in the final slab in a desired manner.

8. A process according to any of the claims 1-7, **characterized in that** the fire retardant is gypsum, aluminium hydroxide or magnesium hydroxide, or a mixture of these with a grain size of 0.2-2 mm.

9. A process according to any of the claims 1-8, **characterized in that** other desired material such as e.g. recycled wool or other additive is added between the primary webs (4a, 4b) together with the fire retardant or separately.

10. A process according to any of the preceding claims, **characterized in that** joining into an intermediate mineral fibre web occurs before or in conjunction with the folding.

11. A process according to any of the preceding claims, **characterized in that** the fire retardant is distributed in two separate longitudinal regions (40, 41), of which one region in the direction of the width of the primary mineral fibre web (4a or 4b) in question extends from one of the lateral edges (44 or 45) and the other region in the direction of the width of the primary mineral fibre web in question extends from the other lateral edge (45 or 44) of the primary mineral fibre web in question in towards the middle of the primary mineral fibre web in question over a distance being less than half the width of the primary mineral fibre web (4a or 4b) in question, preferably ¼ to 1/3 part of the whole width of said primary mineral fibre web.

12. A process according to claim 11, **characterized in that** the number of primary mineral fibre webs (4a, 4b) is two.

13. A fireproof mineral wool product, e.g. a fireproof mineral wool slab, which mineral wool product at least comprises an intermediate mineral wool web (38) formed from at least two joined primary mineral wool webs (4a, 4b), which intermediate mineral wool web is folded on top of itself so that each folded mineral wool layer (39) at least partially covers the previous folded layer so that the mineral wool product in the direction of its thickness comprises at least two compressed folded layers of said primary intermediate web on top of each other, and a fire retardant, which mineral wool product in a manner known per se is finished in order to obtain a fireproof mineral wool product, **characterized in that** said intermediate mineral wool web (38) between at least two of its primary mineral fibre webs (4a, 4b) and/or in at least one of its primary mineral fibre webs (4a, 4b) contains fire retardant distributed over at least one longitudinal region (40, 41), having a width at least partially extending over the width of the primary mineral fibre web (4a, 4b) in question from at least one of the lateral edges (44, 45) of the primary mineral fibre web (4a, 4b) in question.

14. A fireproof mineral wool product according to claim 13, **characterized in that** the fire retardant is concentrated in one or several regions between the middle and the outer surface of the fireproof mineral wool product, preferably in regions at a distance of about 5 - 20 % of the thickness of the fireproof mineral wool product from the outer surface of said mineral wool product in the direction of its thickness.

15. A fireproof mineral wool product according to claim 13 or 14, **characterized in that** the fire retardant is distributed in two separate longitudinal regions (40 and 41), whereof one of the regions in the direction of the width of the primary mineral fibre web (4a, 4b) in question extends from one of the lateral edges (44 or 45) and the other region in the direction of the width of the primary mineral fibre web (4a, 4b) in question extends from the other lateral edge (4 or 44) of the primary mineral fibre web in question in towards the middle of the primary mineral fibre web in question over a distance being less than half the width of the primary mineral fibre web (4a, 4b) in question, preferably ¼ to 1/3 part of the whole width of said primary mineral fibre web.

16. A fireproof mineral wool product according to any of the claims 13 - 15, **characterized in that** the fire retardant has a grain size of 0.2-2 mm.

17. A fireproof mineral wool product according to any of the claims 13 - 16, **characterized in that** the amount of mineral pearls in the mineral wool product is less than 30 % by weight, preferably less than 20 % by weight and that said compressed mineral wool layers contain intermediate layers having at least 20 % by weight of fire retardant which at least partially has penetrated into the primary mineral wool layers which are close to the surfaces of the mineral wool product.

## Patentansprüche

1. Verfahren zum Herstellen von feuerfesten Mineralwolleprodukten, zum Beispiel Mineralwolletafeln, wobei bei dem Prozess Mineral-Rohmaterial geschmolzen und zu Mineralwollefasern (13) verarbeitet wird, die danach gleichzeitig in zwei oder mehr getrennten primären Mineralfaservliesen (4a, 4b) gesammelt werden, jedes auf getrennten eigenen Sammeltrommeln (11, 12), wonach diese getrennten primären Mineralfaservliese (4a, 4b) zu einem späteren Zeitpunkt zu einem intermediären Mineralfaservlies (38) verbunden werden, welches durch einen Faltprozess zu einem endgültigen Mineralfaservlies geformt wird, das eine gewünschte Dicke hat, die in einer Weise, die an sich bekannt ist, fertiggestellt wird, um ein feuerfestes Mineralwolleprodukt zu erhalten, **dadurch gekennzeichnet, dass** vor dem Verbinden der getrennten primären Mineralfaservliese (4a, 4b), um ein intermediäres Mineralfaservlies (38) zu bilden, der Oberfläche der primären Mineralfaservliese (4a oder 4b) und/oder zumindest einem der primären Mineralfaservliese (4a oder 4b) Flammschutzmittel im Raum zwischen den intermediären Mineralfaservliesen (4a, 4b) über mindestens einen Längsbereich (40, 41) zugesetzt wird, der eine Breite hat, die sich zumindest teilweise über die Breite des betreffenden intermediären Mineralfaservlieses (4a oder 4b) von mindestens einer der Seitenkanten (44 oder 45) des besagten primären Mineralfaservlieses erstreckt.

2. Prozess nach Anspruch 1, **dadurch gekennzeichnet, dass** mineralische Perlen, die die Fasern von der Faserbildungsstufe an begleiten, einer konstanten Kraft ausgesetzt werden, die zum Beispiel durch Gravitation erreicht wird, in Kombination mit zugeführter akustischer Energie (E_{A}), die unter einem Winkel gegenüber der Ausbreitungsrichtung der Fasern bei einer solchen Frequenz und Kraft gerichtet ist, dass zumindest ein Teil der Mineralperlen daran gehindert wird, die Sammeltrommeln (11, 12) der primären Mineralfaservliese (4a, 4b) zu erreichen und/oder dass sie aus den bereits gebildeten primären Mineralfaservliesen (4a, 4b) extrudiert werden, wodurch die Menge an Mineralperlen im Endprodukt reduziert wird.

3. Prozess nach Anspruch 2, **dadurch gekennzeichnet, dass** die akustische Energie (E_{A}) zwischen dem Faserbildungsstadium und dem Sammeln der Fasern (13) zu primären Mineralfaservliesen (4a, 4b) und/oder zwischen dem Sammeln der Fasern (13) zu primären Mineralfaservliesen (4a, 4b) und dem Verbinden der primären Mineralfaservliesen zu einem intermediären Mineralfaservlies (38) angewendet wird.

4. Prozess nach einem der Ansprüche 1-3, **dadurch gekennzeichnet, dass** das Flammschutzmittel durch Blasen, Sprühen, Streuen und/oder akustische Energie den entsprechenden gegenüberliegenden Flächen der primären Mineralfaservliese (4a, 4b) und/oder in die Mineralfaservliese zugeführt wird.

5. Prozess nach einem der Ansprüche 1-4, **dadurch gekennzeichnet, dass** das Flammschutzmittel zwischen jeder separaten Sammeltrommel (11, 12) und dem Verbinden der primären Mineralfaservliese (4a, 4b) zu einem intermediären Mineralfaservlies (38) zugesetzt wird.

6. Prozess nach einem der Ansprüche 1-5, **dadurch gekennzeichnet, dass** das Flammschutzmittel in Form eines Trockenpulvers und/oder einer flüssigen Suspension zugesetzt wird.

7. Prozess nach einem der Ansprüche 1-6, **dadurch gekennzeichnet, dass** das Flammschutzmittel auf die gebildeten primären Mineralfaservliese (4a, 4b) kreuzweise auf das Vlies aufgetragen wird, sodass es in Bezug auf die Höhe in der endgültigen Tafel in einer gewünschten Weise verteilt ist.

8. Prozess nach einem der Ansprüche 1-7, **dadurch gekennzeichnet, dass** das Flammschutzmittel Gips, Aluminiumhydroxid oder Magnesiumhydroxid oder eine Mischung derselben mit einer Korngröße von 0,2-2 mm ist.

9. Prozess nach einem der Ansprüche 1-8, **dadurch gekennzeichnet, dass** andere gewünschte Materialien, wie zum Beispiel recycelte Wolle oder andere Zusätze, zwischen den primären Vliesen (4a, 4b) zusammen mit dem Flammschutzmittel oder getrennt zugesetzt werden.

10. Prozess nach einem der vorherigen Ansprüche, **dadurch gekennzeichnet, dass** das Verbinden zu einem intermediären Mineralfaservlies vor oder in Verbindung mit dem Falten auftritt.

11. Prozess nach einem der vorherigen Ansprüche, **dadurch gekennzeichnet, dass** das Flammschutzmittel in zwei getrennten Längszonen (40, 41) verteilt wird, von denen eine Zone in Richtung der Breite des betreffenden primären Mineralfaservlieses (4a oder 4b) sich von einer der seitlichen Kanten (44 oder 45) aus erstreckt, und die andere Zone in Richtung der Breite des betreffenden primären Mineralfaservlieses sich von der anderen Seitenkante (45 oder 44) des betreffenden primären Mineralfaservlieses zur Mitte des betreffenden primären Mineralfaservlieses über eine Distanz erstreckt, die kleiner als die Hälfte der Breite des betreffenden primären Mineralfaservlieses (4a oder 4b) ist, vorzugsweise ¼ bis ein 1/3 der ganzen Breite des primären Mineralfaservlieses.

12. Prozess nach Anspruch 11, **dadurch gekennzeichnet, dass** die Zahl der primären Mineralfaservliese (4a, 4b) zwei ist.

13. Feuerbeständiges Mineralwolleprodukt, zum Beispiel eine feuerbeständige Mineralwolletafel, wobei das Mineralwolleprodukt mindestens ein intermediäres Mineralwollevlies (38) enthält, das aus mindestens zwei verbundenen primären Mineralwollevliesen (4a, 4b) gebildet ist, wobei das intermediäre Mineralwollevlies auf sich selbst gefaltet ist, sodass sich jede gefaltete Mineralwolleschicht (39) zumindest teilweise die vorherige gefaltete Schicht bedeckt, sodass das Mineralwolleprodukt in Richtung seiner Dicke mindestens zwei komprimierte gefaltete Schichten des primären intermediären Vlieses aufeinander umfasst, und ein Flammschutzmittel, mit dem das Mineralwolleprodukt in einer Weise, die an sich bekannt ist, fertiggestellt wird, um ein feuerbeständiges Mineralwolleprodukt zu erhalten, **dadurch gekennzeichnet, dass**
das intermediäre Mineralwollevlies (38) zwischen mindestens zwei seiner primären Mineralfaservliese (4a, 4b) und/oder in mindestens einem seiner primären Mineralfaservliese (4a, 4b) Flammschutzmittel enthält, dass über mindestens eine Längszone (40, 41) verteilt ist, die eine breite hat, die zumindest teilweise sich über die Breite des betreffenden primären Mineralfaservlieses (4a, 4b) von mindestens einer der Seitenkanten (44, 45) des betreffenden primären Mineralfaservlies (4a, 4b) erstreckt.

14. Feuerbeständiges Mineralwolleprodukt nach Anspruch 13, **dadurch gekennzeichnet, dass** das Flammschutzmittel in einer oder mehreren Bereichen zwischen der Mitte und der Außenfläche des feuerbeständigen Mineralwolleproduktes konzentriert ist, vorzugsweise in Bereichen in einem Abstand von etwa 5-20 % der Dicke des feuerbeständigen Mineralwolleproduktes von den Außenflächen des Mineralwolleproduktes in Richtung seiner Dicke.

15. Feuerbeständiges Mineralwolleprodukt nach Anspruch 13 oder 14, **dadurch gekennzeichnet, dass** das Flammschutzmittel in zwei getrennten Längszonen (40 und 41) verteilt wird, von denen eine Zone in Richtung der Breite des betreffenden primären Mineralfaservlieses (4a, 4b) sich von einer der seitlichen Kanten (44 oder 45) aus erstreckt, und die andere Zone in Richtung der Breite des betreffenden primären Mineralfaservlieses (4a, 4b) sich von der anderen Seitenkante (4 oder 44) des betreffenden primären Mineralfaservlieses zur Mitte des betreffenden primären Mineralfaservlieses über eine Distanz erstreckt, die kleiner als die Hälfte der Breite des betreffenden primären Mineralfaservlieses (4a, 4b) ist, vorzugsweise ¼ bis ein 1/3 der ganzen Breite des primären Mineralfaservlieses.

16. Feuerbeständiges Mineralwolleprodukt nach einem der Ansprüche 13-15, **dadurch gekennzeichnet, dass** das Flammschutzmittel eine Korngröße von 0,2 - 2 mm hat.

17. Feuerbeständiges Mineralwolleprodukt nach einem der Ansprüche 13-16, **dadurch gekennzeichnet, dass** die Menge der Mineralperlen im Mineralwolleprodukt kleiner als 30 Gew.-% ist, vorzugsweise kleiner als 20 Gew.-% und das die komprimierten Mineralwolle Schichten zwischen Schichten enthalten, die mindestens 20 Gew.-% Flammschutzmittel haben, welches zumindest teilweise in die primären Mineralwolleschichten eingedrungen sind, die nahe den Oberflächen des Mineralwolleproduktes liegen.

## Revendications

1. Procédé de fabrication de produits en laine minérale ignifuges, par exemple de plaques en laine minérale, dans lequel procédé un matériau brut minéral est soumis à fusion et fibrage pour donner des fibres de laine minérale (13) lesquelles sont ensuite collectées simultanément en deux ou davantage de nappes de fibres minérales primaires séparées (4a, 4b), chacune sur des tambours de collecte propres séparés (11, 12), après quoi ces nappes de fibres minérales primaires séparées (4a, 4b), à une étape ultérieure, sont jointes en une nappe de fibres minérales intermédiaire (38) laquelle, via un procédé de pliage, est formée en une nappe de fibres minérales finale ayant une épaisseur souhaitée laquelle, d'une manière connue en soi, est parachevée afin d'obtenir un produit en laine minérale ignifuge,
**caractérisé en ce que**, avant que les nappes de fibres minérales primaires séparées (4a, 4b) soient jointes pour former une nappe de fibres minérales intermédiaire (38), un agent ignifuge est ajouté à la surface et/ou dans au moins l'une des nappes de fibres minérales primaires (4a ou 4b) dans l'espace entre les nappes de fibres minérales intermédiaires (4a, 4b) sur au moins une zone longitudinale (40, 41) ayant une largeur s'étendant au moins partiellement sur la largeur de la nappe de fibres minérales primaire (4a ou 4b) en question à partir d'au moins l'un des bords latéraux (44 ou 45) de la nappe de fibres minérales primaire en question.

2. Procédé selon la revendication 1, **caractérisé en ce que** des perles minérales accompagnant les fibres depuis l'étape de fibrage sont soumises à une force constante, obtenue par exemple par la gravitation en combinaison avec de l'énergie acoustique (E_{A}) fournie, orientée selon un angle à l'encontre de la direction de propagation des fibres à une fréquence et force telles, qu'au moins une partie des perles minérales sont empêchées d'atteindre les tambours de collecte (11, 12) des nappes de fibres minérales primaires (4a, 4b) et/ou qu'elles sont extrudées à partir des nappes de fibres minérales primaires (4a, 4b) déjà formées, moyennant quoi la quantité de perles minérales dans le produit final est réduite.

3. Procédé selon la revendication 2, **caractérisé en ce que** l'énergie acoustique (E_{A}) est appliquée entre l'étape de fibrage et la collecte des fibres (13) en nappes de fibres minérales primaires (4a, 4b) et/ou entre la collecte des fibres (13) en nappes de fibres minérales primaires (4a, 4b) et la jonction desdites nappes de fibres minérales primaires en une nappe de fibres minérales intermédiaire (38).

4. Procédé selon l'une quelconque des revendications 1-3, **caractérisé en ce que** l'agent ignifuge est fourni par soufflage, pulvérisation, aspersion et/ou énergie acoustique à des surfaces opposées respectives des nappes de fibres minérales primaires (4a, 4b) et/ou à l'intérieur des nappes de fibres minérales.

5. Procédé selon l'une quelconque des revendications 1-4, **caractérisé en ce que** l'agent ignifuge est ajouté entre chaque tambour de collecte (11, 12) séparé et la jonction des nappes de fibres minérales primaires (4a, 4b) en une nappe de fibres minérales intermédiaire (38).

6. Procédé selon l'une quelconque des revendications 1-5, **caractérisé en ce que** l'agent ignifuge est ajouté sous la forme d'une poudre sèche et/ou d'une suspension liquide.

7. Procédé selon l'une quelconque des revendications 1-6, **caractérisé en ce que** l'agent ignifuge est appliqué sur les nappes de fibres minérales primaires (4a, 4b) formées transversalement à la nappe de sorte que, compte tenu de la hauteur, il est réparti dans la plaque finale d'une manière souhaitée.

8. Procédé selon l'une quelconque des revendications 1-7, **caractérisé en ce que** l'agent ignifuge est du gypse, de l'hydroxyde d'aluminium ou de l'hydroxyde de magnésium, ou un mélange de ceux-ci avec une taille de grain de 0,2-2 mm.

9. Procédé selon l'une quelconque des revendications 1-8, **caractérisé en ce qu'**un autre matériau souhaité, tel par exemple de la laine recyclée ou un autre additif, est ajouté entre les nappes primaires (4a, 4b) ensemble avec l'agent ignifuge ou séparément.

10. Procédé selon l'une quelconque des revendications précédentes, **caractérisé en ce que** la jonction en une nappe de fibres minérales intermédiaire a lieu avant ou conjointement au pliage.

11. Procédé selon l'une quelconque des revendications précédentes, **caractérisé en ce que** l'agent ignifuge est réparti dans deux zones longitudinales séparées (40, 41), dont une zone dans la direction de la largeur de la nappe de fibres minérales primaire (4a ou 4b) en question s'étend à partir d'un des bords latéraux (44 ou 45) et l'autre zone dans la direction de la largeur de la nappe en fibres minérales primaire en question s'étend à partir de l'autre bord latéral (45 ou 44) de la nappe de fibres minérales primaire en question vers le milieu de la nappe de fibres minérales primaire en question sur une distance inférieure à la moitié de la largeur de la nappe de fibres minérales primaire (4a ou 4b) en question, de préférence une partie de ¼ à 1/3 de la largeur totale de ladite nappe de fibres minérales primaire.

12. Procédé selon la revendication 11, **caractérisé en ce que** le nombre de nappes de fibres minérales primaires (4a, 4b) est de deux.

13. Produit en laine minérale ignifuge, par exemple une plaque en laine minérale ignifuge, lequel produit en laine minérale comprend au moins une nappe en laine minérale intermédiaire (38) formée à partir d'au moins deux nappes en laine minérale primaires (4a, 4b) jointes, laquelle nappe en laine minérale intermédiaire est repliée sur elle-même de sorte que chaque couche de laine minérale pliée (39) recouvre au moins partiellement la couche pliée précédente de sorte que le produit en laine minérale comprend, dans le sens de son épaisseur, au moins deux couches pliées comprimées de ladite nappe intermédiaire primaire l'une au-dessus de l'autre, et un agent ignifuge, lequel produit en laine minérale est parachevé d'une manière connue en soi afin d'obtenir un produit en laine minérale ignifuge, **caractérisé en ce que** ladite nappe en laine minérale intermédiaire (38) contient, entre au moins deux de ses nappes de fibres minérales primaires (4a, 4b) et/ou dans au moins l'une de ses nappes de fibres minérales primaires (4a, 4b), un agent ignifuge réparti sur au moins une zone longitudinale (40, 41) ayant une largeur s'étendant au moins partiellement sur la largeur de la nappe de fibres minérales primaire (4a, 4b) en question à partir d'au moins l'un des bords latéraux (44, 45) de la nappe de fibres minérales primaire (4a, 4b) en question.

14. Produit en laine minérale ignifuge selon la revendication 13, **caractérisé en ce que** l'agent ignifuge est concentré dans une ou plusieurs zones entre le milieu et la surface extérieure du produit en laine minérale ignifuge, de préférence dans des zones à une distance de près de 5-20% de l'épaisseur du produit en laine minérale ignifuge par rapport à la surface extérieure dudit produit en laine minérale dans la direction de son épaisseur.

15. Produit en laine minérale ignifuge selon la revendication 13 ou 14, **caractérisé en ce que** l'agent ignifuge est réparti dans deux zones longitudinales séparées (40 et 41) dont l'une des zones dans la direction de la largeur de la nappe de fibres minérales primaire (4a, 4b) en question s'étend à partir de l'un des bords latéraux (44 ou 45) et dont l'autre zone dans la direction de la largeur de la nappe de fibres minérales primaire (4a, 4b) en question s'étend à partir de l'autre bord latéral (4, ou 44) de la nappe de fibres minérales primaire en question vers le milieu de la nappe de fibres minérales primaire en question sur une distance de moins de la moitié de la largeur de la nappe de fibres minérales primaire (4a, 4b) en question, de préférence une partie de ¼ à 1/3 de la largeur totale de ladite nappe de fibres minérales primaire.

16. Produit en laine minérale ignifuge selon l'une quelconque des revendications 13-15, **caractérisé en ce que** l'agent ignifuge a une taille de grain de 0,2-2 mm.

17. Produit en laine minérale ignifuge selon l'une quelconque des revendications 13-16, **caractérisé en ce que** la quantité de perles minérales dans le produit en laine minérale est inférieure à 30% en poids, de préférence inférieure à 20% en poids, et que lesdites couches en laine minérale comprimées contiennent des couches intermédiaires ayant au moins 20% en poids d'agent ignifuge qui a au moins partiellement pénétré dans les couches en laine minérale primaires qui sont proches des surfaces du produit en laine minérale.
